# EUROPEAN PATENT SPECIFICATION

(11) **EP 3 869 646 B1**
(45) Date of publication and mention of the grant of the patent: **03.04.2024**
(21) Application number: 20157864.8
(22) Date of filing: 18.02.2020
(51) Int. Cl.: H02B 11/24

(54) **AN ELECTRIC SWITCHGEAR FOR LV AND MV APPLICATIONS**
ELEKTRISCHES SCHALTGERÄT FÜR NIEDER- UND MITTELSPANNUNG ANWENDUNGEN
APPAREILLAGE DE COMMUTATION ÉLECTRIQUE POUR APPLICATIONS EN BASSE ET MOYENNE TENSION

(43) Date of publication of application: 25.08.2021
(73) Proprietor: ABB Schweiz AG, 5400 Baden (CH)
(72) Inventor: Peracchi, Fabrizio, 24021 Albino (BG) (IT); Rambaldini, Simone, 20037 Paderno Dugnano (MI) (IT); Arvati, Andrea, 24027 Nembro (BG) (IT)
(74) Representative: De Bortoli, Eros

(56) References cited:
- WO-A1-2013/063733
- WO-A1-2014/001863
- CN-U- 204 651 767
- JP-U- S5 715 614
- JP-U- S57 197 710

## Description

The present invention relates to an electric switchgear for low-voltage or medium-voltage applications.

More particularly, the present invention relates to an electric switchgear including a withdrawable switching apparatus and having an improved shutter assembly to segregate live parts of the switchgear.

Electric switchgears are well known in electric power transmission and distribution grids. Known electric switchgears usually comprise a metallic cabinet internally divided into several compartments or cells accommodating various apparatuses and equipment.

In many applications, electric switchgears include a switching apparatus (e.g. a circuit breaker) of the withdrawable type, i.e. reversibly movable between a first position (inserted position), in which the switching apparatus is electrically connected with the disconnection contacts of the switchgear, and a second position (withdrawn position), in which the switching apparatus is electrically disconnected from said disconnection contacts.

Electric switchgears of the above-mentioned type generally include a shutter assembly to segregate live parts, in particular the disconnection contacts electrically connected with line conductors.

A shutter assembly generally comprises one or more shutter panels, which can be reversibly moved, upon a corresponding motion of the switching apparatus, between a non-protective position, in which the disconnection contacts of the switchgear can electrically couple with the switching apparatus, and a protective position, in which said shutter panels shield the disconnection contacts of the switchgear and make them inaccessible to the switching apparatus and to operators. Examples of such shutter assemblies can be seen in JPS57197710U, CN204651767U, JPS5715614U, WO2014/001863A1 and WO2013/063733A1.

Even if they generally perform quite satisfactorily, currently available electric switchgears of the above-mentioned type still have some aspects that can be further improved.

As is known, these systems have a relatively huge size due to the need of ensuring suitable dielectric distances between the live parts and the remaining internal components.

Currently available electric switchgears have been experienced to provide poor performances in terms of dielectric insulation as soon as their overall size needs to be compacted for some reasons, e.g. due to the presence of relatively small installation spaces.

Thus, electric discharges or arcs may often occur and they may cause relevant damages to the switchgear internal components and, possibly, be very dangerous for operators.

In order to mitigate these problems, some electric switchgears of the state of the art have some internal components (e.g. the shutter panels), in particular those mostly exposed to live parts, covered with special electrically insulating paints.

The experience has shown how electrically insulating paints ensure a satisfactory level of dielectric insulation only if the coating of the components is uniform and homogeneous. The painting process of said components is thus rather difficult and expensive to carry out at industrial level.

The main aim of the present invention is to provide an electric switchgear, in particular of the type including a withdrawable switching apparatus, which makes it possible to overcome or mitigate the aforementioned problems of the known art.

In the context of this aim, an object of the present invention is to provide an electric switchgear, in which the formation of electric discharges or electric arcs is prevented or greatly reduced, even if the internal dielectric distances are relatively small.

Another object of the present invention is to provide an electric switchgear, which can be easily designed with an overall compact size without jeopardizing the dielectric insulation levels between the live parts and the other internal components of the switchgear.

Yet another object of the present invention is to provide an electric switchgear easy to manufacture at industrial level, at competitive costs with similar installations of the state of the art.

This aim and these objects, together with other objects that will become evident from the following description and accompanying drawings, are achieved, according to the present invention, by an electric switchgear, according to claim 1 and the related dependent claims set out below.

In a general definition, the electrical switchgear, according to the invention, comprises:
- a cabinet having a plurality of walls defining an internal volume. Said cabinet includes adjacent first and second sections, which are preferably separated by an internal wall including an opening that defines a passage between said first and second sections;
- first and second disconnection contacts connectable with corresponding conductors of an electric line. Said first and second disconnection contacts are accommodated in the first section of said cabinet;
- a withdrawable switching apparatus reversibly movable along a reference direction of motion. Said switching apparatus comprises third and fourth disconnection contacts that can be electrically coupled with or decoupled from said first and second disconnection contacts, respectively, upon corresponding movements of said switching apparatus. Said switching apparatus is accommodated in the second section of said cabinet;
- a shutter assembly movable along a reference plane of motion perpendicular to the reference direction of motion of said switching apparatus.

The shutter assembly comprises a first shutter panel and a second shutter panel at least partially made of conductive material and spaced one from another by a separation gap.

The shutter assembly comprises one or more elongated connection elements mechanically connecting said first and second shutter panels with a rigid link. In this way, said first and second shutter panels can move together along said reference plane of motion while maintaining their relative position.

Each connection element is at least partially made of electrically conductive material and has an elongated blunt shape with rounded edges.

Preferably, the shutter assembly comprises a pair of connection elements arranged parallel one to another along directions parallel to said reference plane of motion and perpendicular to a basement wall of said cabinet.

Each connection element comprises opposite first and second ends mechanically connected with said first and second shutter panels, respectively, and an intermediate portion defining the separation gap between said first and second shutter panels.

The first and second ends of each connection element have a rounded shape.

The intermediate portion of each connection element has an elongated rounded shape.

The intermediate portion of each connection element is at least partially covered by a layer of electrically insulating material.

Preferably, the first shutter panel has opposite first and second edges, wherein the first edge partially delimits a separation gap between said first and second shutter panels.

Preferably, the first edge of said first shutter panel has a rounded shape.

Preferably, the first edge of said first shutter panel is covered by a layer of electrically insulating material.

Preferably, the second shutter panel has opposite third and fourth edges, wherein the third edge partially delimits a separation gap between said first and second shutter panels.

Preferably, the third edge of said second shutter panel has a rounded shape.

Preferably, the third edge of said second shutter panel is covered by a layer of electrically insulating material.

Preferably, the fourth edge of said second shutter panel is covered by a layer of electrically insulating material.

According to an aspect of the invention, the said shutter assembly is reversibly movable along said reference plane of motion between:
- a non-protective position, in which said first shutter panel is not interposed between said first disconnection contacts and said third disconnection contacts and in which said second shutter panel is not interposed between said second disconnection contacts and said second disconnection contacts; and
- a protective position, in which said first shutter panel is interposed between said first disconnection contacts and said third disconnection contacts and in which said second shutter panel is interposed between said second disconnection contacts and said fourth disconnection contacts.

According to an aspect of the invention, said switching apparatus is reversibly movable along said reference direction of motion, perpendicular to the reference plane of motion of said shutter assembly, between:
- an inserted position, in which said third disconnection contacts are coupled with said first disconnection contacts and in which said fourth disconnection contacts are coupled with said second disconnection contacts; and
- a withdrawn position, in which said third disconnection contacts are decoupled from said first disconnection contacts and in which said fourth disconnection contacts are decoupled from said second disconnection contacts.

Preferably, the electric switchgear, according to the invention, comprises a mechanical arrangement including a plurality of transmission levers mechanically connecting said switching apparatus with said shutter assembly.

Conveniently, a motion of said switching apparatus from said inserted position to said withdrawn position causes a motion of said shutter assembly from said non-protective position to said protective position.

Conveniently, a motion of said switching apparatus from said withdrawn position to said inserted position causes a motion of said shutter assembly from said protective position to said non-protective position.
- figure 1 schematically shows the switchgear, according to the invention, in a possible operating condition;
- figure 2 schematically shows the switchgear, according to the invention, in another possible operating condition;

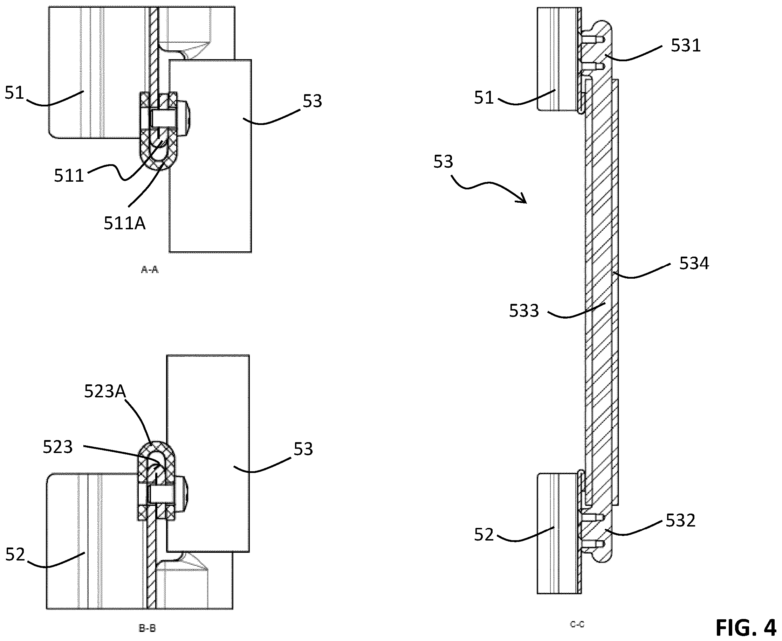

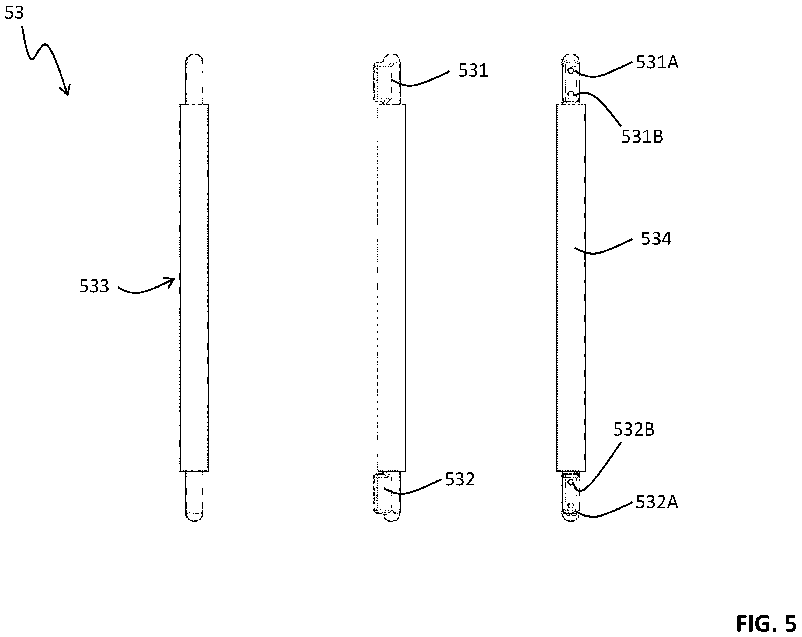

- figures 3-5 schematically show some views of the components of a shutter assembly in the switchgear, according to the invention.

Referring to the above-mentioned figures, the present invention relates to an electric switchgear 1 for low-voltage or medium-voltage applications.

For the purposes of the present invention, the term "low voltage" (LV) relates to operating voltages lower than 1 kV AC and 1.5 kV DC whereas the term "medium voltage" (MV) relates to operating voltages higher than 1 kV up to some tens of kV, e.g. 70 kV AC and 100 kV DC.

The switchgear 1 comprises a cabinet 2 including a plurality of walls 21, 22, 23, 24, 25 defining an internal volume.

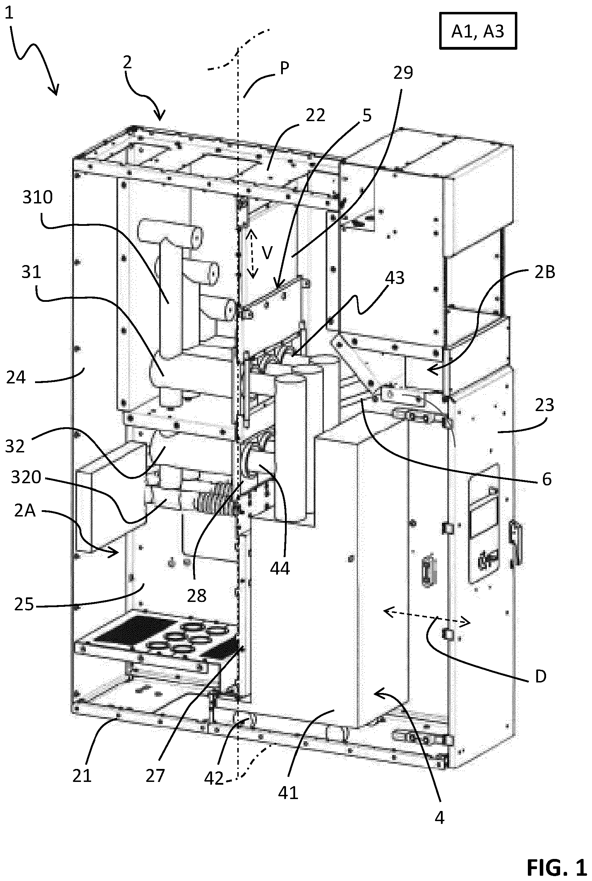

Referring to a normal installation position, the cabinet 2 comprises a horizontal basement wall 21, a horizontal top wall 22 in an opposite position with respect to the basement wall 21 and multiple vertical walls arranged perpendicularly with respect to the basement wall 21 (figures 1-2).

These vertical walls comprise a front wall 23, at which an operator can access to the internal volume of the cabinet, a rear wall 24 in opposite position with respect to the front wall 23 and a pair of opposite lateral walls 25 (partially shown in figures 1-2) perpendicular to the walls 21, 22, 23, 24.

In general, the cabinet 2 comprises a first section 2A and a second section 2B that are adjacent one to another, respectively in distal position and in proximal position with respect to the front wall 23.

The first section 2A of the cabinet 2 accommodates the live parts of the switchgear 1, i.e. the main electrical connections (e.g. bus-bars, cables, bushings and disconnection contacts) with suitable conductors of an electric line.

In addition, the first section 2A of the cabinet 2 may conveniently accommodate other devices (not shown), such as an earthing apparatus, e.g. a disconnector.

The first section 2A of the cabinet 2 is conveniently intended to accommodate a switching apparatus (e.g. a circuit breaker), accessory electrical connections and other accessory devices.

Each section 2A, 2B of the cabinet 2 may, in turn, be divided in different compartments or cells to ensure a suitable segregation the internal components of the switchgear.

The cabinet 2 conveniently comprises an internal wall 27 separating the first and second sections 2A, 2B.

The internal wall 27 is arranged perpendicularly with respect to the basement wall 21 and the lateral walls 25 of the cabinet 25. Referring to a normal installation position of the cabinet 2, the internal wall 27 extends vertically from the basement wall 21, in parallel with the front wall 23.

Conveniently, the internal wall 27 comprises a number of suitably arranged partitioning portions 29, each forming a physical barrier between the sections 2A, 2B of the cabinet 2.

However, the internal wall 27 includes an opening 28 forming a passage between the sections 2A, 2B of the cabinet 2 (figure 1).

In general, the cabinet 2 may be arranged according to solutions of known type. Thus, hereinafter, it will be not described in further details, for the sake of brevity.

The electric switchgear 1 comprises one or more first disconnection contacts 31 accommodated in the first section 2A of the cabinet.

The first disconnection contacts 31 are fixed electric contacts for electrical connection with corresponding conductors of an electric line, which, in turn, are electrically connected to an electric power source.

To this aim, each first electric contact 31 is mechanically and electrically coupled with a corresponding first bushing 310, which is in turn electrically connected with a line conductor.

Preferably, the first disconnection contacts 31 (which can also be referred to as "upper fixed disconnection contacts" referring to a normal installation position of the cabinet) are arranged in a distal position with respect to the basement wall 21.

The electric switchgear 1 comprises one or more second disconnection contacts 32 accommodated in the first section 2A of the cabinet.

The second disconnection contacts 32 are fixed electric contacts for electrical connection with corresponding conductors of an electric line, which, in turn, are electrically connected to an electric load.

To this aim, each second electric contact 32 is mechanically and electrically coupled with a corresponding second bushing 320, which is in turn electrically connected with a line conductor.

Preferably, the second disconnection contacts 32 (which can also be referred to as "lower fixed disconnection contacts" referring to a normal installation position of the cabinet) are conveniently arranged in a proximal position with respect to the basement wall 21.

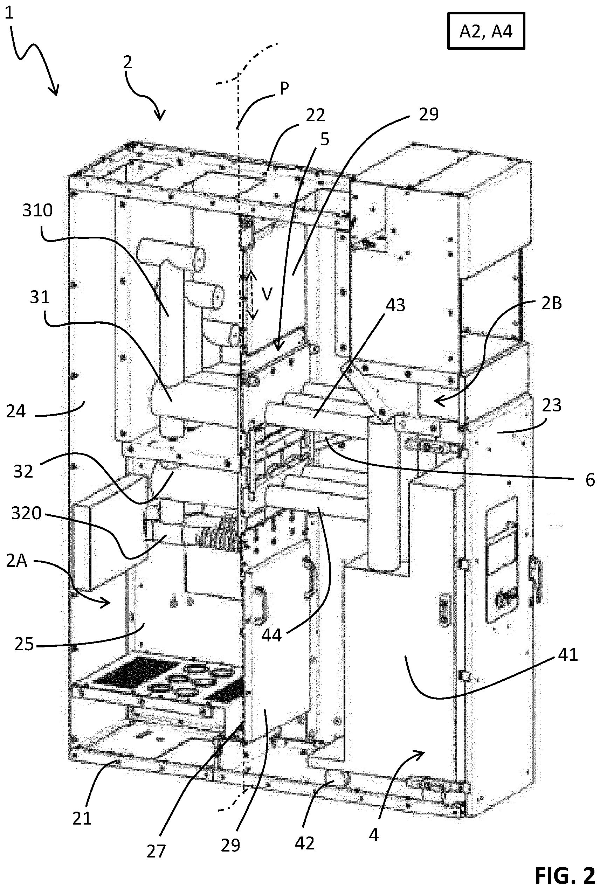

In the embodiment illustrated in figures 1 and 2, the switchgear 1 is of three-phase type and it thereby includes three first disconnection contacts 31 and three second disconnection contacts 32. According to other embodiments of the invention, however, the switchgear 1 may include a different number of disconnection contacts 31, 32.

In general, the disconnection contacts 31, 32 may be arranged according to solutions of known type. Thus, hereinafter, they will be not described in further details, for the sake of brevity.

The electric switchgear 1 comprises a withdrawable switching apparatus 4 accommodated in the second section 2B of the cabinet 2.

The switching apparatus 4 preferably comprises a switching unit 41 mounted on a suitable track 42 that can slide along a suitable sliding plane parallel to the basement wall 21 of the cabinet 2.

The switching apparatus 4 is thus reversibly movable along a first reference direction D, which is conveniently parallel to the basement wall 21 and perpendicular to the front wall 23 and the internal wall 27 of the cabinet 2 (figure 1).

The switching apparatus 4 comprises one or more third disconnection contacts 43, each of which is electrically connected with a corresponding electric pole of the switching unit 41. The third disconnection contacts 43 can be electrically coupled with or decoupled from the first disconnection contacts 31 of the switchgear upon a corresponding movement of the switching apparatus.

Preferably, the third disconnection contacts 43 (which can also be referred to as "upper movable disconnection contacts" referring to a normal installation position of the cabinet) are in a distal position with respect to the basement wall 21.

The switching apparatus 4 comprises one or more fourth disconnection contacts 44, each of which is electrically connected with a corresponding electric pole of the switching unit 41. The fourth disconnection contacts 44 can be electrically coupled with or decoupled from the second disconnection contacts 32 of the switchgear upon a corresponding movement of the switching apparatus.

Preferably, the fourth disconnection contacts 44 (which can also be referred to as "lower movable disconnection contacts" referring to a normal installation position of the cabinet 2) are in a proximal position with respect to the basement wall 21.

As mentioned above, the disconnection contacts 43, 44 of the switching apparatus may be coupled or uncoupled with the disconnection contacts 43, 44 of the switchgear upon suitable movements of said switching apparatus.

In particular, the switching apparatus 4 is reversibly movable along the reference direction D of motion between:
- an inserted position A1 (figure 1), in which the third disconnection contacts 43 are coupled with the first disconnection contacts 31 and the fourth disconnection contacts 44 are coupled with the second disconnection contacts 32; and
- a withdrawn position A2 (figure 2), in which the third disconnection contacts 43 are decoupled from the first disconnection contacts 31 and the fourth disconnection contacts 44 are decoupled from the second disconnection contacts 32.

When the switching apparatus is in the inserted position A1, for each electric phase, a current can flow along a conductive path including a first disconnection contact 31, a third disconnection contact 43, an electric pole of the switching unit 41, a fourth disconnection contact 44 and a second disconnection contact 32.

When the switching apparatus is in the withdrawn position A2, the disconnection contacts 43, 44 are separated from the disconnections contacts 31, 32 and no currents can flow along the electric poles of said switching apparatus. The electrical continuity between the first and second disconnection contacts 31, 32 of the switchgear is therefore interrupted.

In order to couple with or decouple from the disconnector contacts 31 and 32, the disconnection contacts 43, 44 conveniently pass through the opening 28 of the internal wall 27 of the cabinet.

In the embodiment illustrated in figures 1 and 2, the switching apparatus 4 is of three-phase type and it therefore includes three third disconnection contacts 43 and three fourth disconnection contacts 44. According to other embodiments of the invention, however, the switching apparatus 4 may include a different number of disconnection contacts 43, 44.

Preferably, the switching apparatus 4 is a circuit breaker.

According to some embodiments of the invention, however, it may be of different type, e.g. contactor.

In general, the switching apparatus 4 may be arranged according to solutions of known type. Thus, hereinafter, it will be not described in further details, for the sake of brevity. According to the invention, the switchgear 1 comprises a shutter assembly 5.

The basic function of the shutter assembly 5 consists in providing a physical barrier between the disconnection contacts 31, 32 of the switchgear and the disconnection contacts of the switching apparatus at the opening 28 of the internal wall 27, particularly when the switching apparatus is in a withdrawn position A2.

The shutter assembly 5 is operatively associated to the internal wall 27 of the cabinet 2 in such a way to be movable along a reference plane P of motion defined by said internal wall. Conveniently, the reference plane of motion P is perpendicular to the reference direction D of motion of the switching apparatus 4, thereby being a vertical plane perpendicular to the basement wall 21 (referring to a normal installation position of the cabinet 2).

The shutter assembly 5 is thus movable along a second reference direction V of motion, which is parallel to the reference plane P of motion and perpendicular to the basement wall 21 of the cabinet (thereby being vertical referring to a normal installation position of the cabinet 2).

According to an important aspect of the invention, the shutter assembly 5 is arranged in such a way to have a reduced size with respect to corresponding solutions of the state of the art.

According to the invention, the shutter assembly 5 comprises a first shutter panel 51 and a second shutter panel 52 at least partially made of electrically conductive material, e.g. Al.

Preferably, each shutter panel 51, 52 is formed by a plate of electrically conductive material arranged along the reference plane P of motion.

In the embodiments shown in the cited figures, conveniently, the shutter panels 51, 52 have a rectangular shape. According to other embodiments of the invention, however, they may have a different shape, such as square shape or a polygonal shape.

According to the invention, the first and second shutter panels 51, 52 are arranged along the same reference plane P of motion (parallel one to another) and they are spaced one from another by a separation gap 55.

Preferably, the first shutter panel 51 is arranged in a distal position with respect to the basement wall 21, i.e. in an upper position along the reference plane P of motion (reference is made to a normal installation position of the cabinet).

Preferably, the first shutter panel 51 comprises first and second opposite edges 511, 512 that extend along directions parallel to the reference plane of motion P and to the basement wall 21 of the cabinet 2, i.e. horizontally along the reference plane P of motion (referring to a normal installation position of the cabinet).

Preferably, the first edge 511 of the first shutter 51 delimits (upwardly) the separation gap 55 between the first and second shutter panels 51, 52.

Preferably, the second edge 511 of the first shutter 51 extends parallel to the first edge 511 in a distal position with respect to the separation gap 55 and the basement wall 21.

Preferably, the second shutter panel 52 is arranged in a proximal position with respect to the basement wall 21, i.e. in a lower position along the reference plane P of motion (reference is made to a normal installation position of the cabinet 2).

Preferably, the second shutter panel 52 comprises third and fourth opposite edges 523, 524 that extend along directions parallel to the reference plane of motion P and to the basement wall 21 of the cabinet 2, i.e. horizontally along the reference plane P of motion (referring to a normal installation position of the cabinet 2).

Preferably, the third edge 523 of the second shutter 52 partially delimits (downwardly) the separation gap 55 between the first and second shutter panels 51, 52.

Preferably, the fourth edge 524 of the second shutter 52 extends parallel to the third edge 523 in a distal position with respect to the separation gap 55 and in a proximal position with respect to and the basement wall 21.

According to the invention, the shutter assembly 5 comprises one or more elongated connection elements 53 mechanically connecting the first and second shutter panels 51, 52 with a rigid link.

In this way, the first and second shutter panels 51, 52 can move together (as one piece) along the reference plane P of motion and they can maintain unchanged their relative position during their movements.

This solution allows reducing the overall size of the cabinet 2, particularly in a direction perpendicular to the front wall 23.

Preferably, the shutter assembly 5 comprises a pair of connection elements 53 arranged parallel one to another along directions parallel to the reference plane P of motion and perpendicular to the basement wall 21 of the cabinet 2.

According to another important aspect of the invention, each connection element 53 is at least partially made of electrically conductive material (e.g. Al or Cu) and it has an elongated blunt shape with rounded edges.

Thanks to this arrangement, the strength of the electric field present at the opening 28 28 of the internal wall 27 during the operation of the electric switchgear is reduced, as the connection elements 53 smooth the electric field lines and increase the mutual distance between these lines.

Additionally, the arrangement of conductive connection elements 53 coupled with both the shutter panels 51, 52 ensure an electric continuity between said shutter panels, which allows grounding these components through the walls of the cabinet 2 without using dedicated grounding leads or wirings.

Each connection element 53 is formed by shaped bar of conductive material and it includes opposite first and second ends 531, 532 and an intermediate portion 533.

The first and second ends 531, 532 of each connection element 53 are mechanically connected with the first and second shutter panels 51, 52, respectively.

The intermediate portion 533 of each connection element 53 thus conveniently defines the separation gap 55 between first and second shutter panels 51, 52.

The first and second ends 531, 532 of the shaped bar 53 have a rounded shape.

The first and second ends 531, 532 include a coupling surface 531A, 532A with the shutter panels 51, 52, respectively.

Preferably, at each coupling surface 531A, 532A, conveniently, suitable holes 531B, 532B for the insertion of corresponding coupling screws are arranged.

Each coupling surface 531A, 532A is flat in such way to rest completely on a corresponding coupling surface (not shown) of the shutter panels 51, 52. In this way, when they are mechanically coupled with the shutter panels 51, 52, the shaped ends 531, 532 protrude from these latter with a rounded shape.

The intermediate portion 533 of each connection element 53 has an elongated rounded shape, e.g. a cylindrical shape.

Each connection element 53 has its intermediate portion 533 covered by a layer 534 of electrically insulating material.

This solution is quite advantageous as it remarkably improve the dielectric insulation of the connection elements 53, particularly at the regions more directly exposed to the live parts of the switchgear through the opening 28 of the internal wall 27.

The layer 534 of electrically insulating material is co-molded with the corresponding connection element 53. Other solutions to cover the intermediate portion 533 with a corresponding layer of electrically insulating materials are however available.

According to another aspect of the invention, also the shutter panels 51, 52 are arranged in such a way to reduce the strength of the electric field present at the opening 28 of the internal wall 27 during the operation of the electric switchgear.

Preferably, the first shutter panel 51 has the first edge 511, which delimits the separation gap 55 between the shutter panels, arranged with a rounded shape.

Preferably, the second shutter panel 52 has the third edge 523, which delimits the separation gap 55 between the shutter panels at a lower side, arranged with a rounded shape.

Preferably, the first edge 511 of the first shutter panel 51 is covered by a layer 510A of electrically insulating material.

Preferably, the third edge 523 of the second shutter panel 52 is covered by a layer 520A of electrically insulating material.

Preferably, the fourth edge 523 of the second shutter panel 52, which is an opposite position with respect to the third edge 523, is covered by a layer 520B of electrically insulating material.

All these arrangements remarkably improve the dielectric insulation of the shutter panels 51 and 52, particularly at the regions more directly exposed to the live parts of the switchgear through the opening 28 of the internal wall 27.

Preferably, the layers of electrically insulating material 510A, 520A, 520B can be formed by profiles of electrically insulating material mechanically coupled with the corresponding edges 511, 523, 524 of the first and second shutters 51, 52 through suitable connection screws. Other solutions to cover the edges 511, 523, 524 of the first and second shutters 51, 52 with corresponding layers of electrically insulating materials are however available.

As mentioned above, the shutter assembly 5 (including the first and second shutters 51, 52 that are mechanically connected as one piece through the one or more connection elements 53) is movable along the reference plane P of motion defined by the internal wall 27 and along the second reference direction V of motion.

Conveniently, the shutter assembly 5 is reversibly movable along the reference plane of motion P between:
- a non-protective position A3, in which the first shutter panel 51 is not interposed between the first disconnection contacts 31 and the third disconnection contacts 43 and the second shutter panel 52 is not interposed between the second disconnection contacts 32 and the second disconnection contacts 44, at the opening 28 of the internal wall 27 (figure 1); and
- a protective position A4, in which the first shutter panel 51 is interposed between the first disconnection contacts 31 and the third disconnection contacts 43 and the second shutter panel 52 is interposed between the second disconnection contacts 32 and the fourth disconnection contacts 44, at the opening 28 of the internal wall 27 (figure 2).

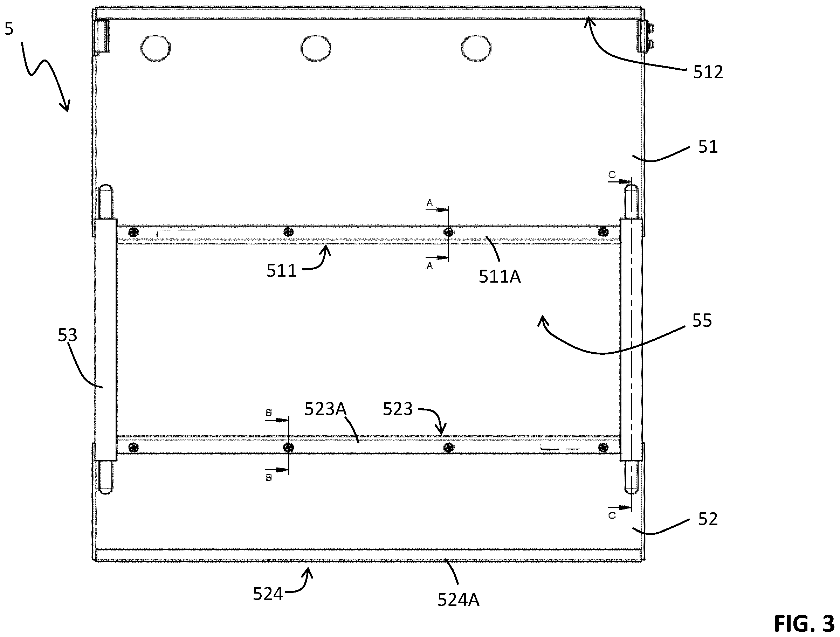

Preferably, the electric switchgear 1 comprises an actuation mechanism 6 including a plurality of motion transmission levers mechanically connecting the switching apparatus 4, in particular the movable truck 42, with the shutter assembly 5 (figure 3).

The actuation mechanism 6 is basically directed to actuate the shutter assembly 5 in coordination with the motion of the switching apparatus 4.

In particular, the actuation mechanism 6 is designed in such way that:
- a motion of the switching apparatus 4 from the inserted position A1 to the withdrawn position A2 causes a motion of the shutter assembly 5 from the non-protective position A3 to the protective position A4;
- a motion of the switching apparatus 4 from the withdrawn position A2 to the inserted position A1 causes a motion of the shutter assembly 5 from the protective position A4 to the non-protective position A3.

In general, the actuation mechanism 6 may be arranged according to solutions of known type.

Thus, hereinafter, it will be not described in further details, for the sake of brevity.

It has been found in practice that the electric switchgear, according to the invention, provide relevant advantages with respect to corresponding solutions of the state of the art.

Thanks of the presence of arrangements capable of reducing the strength of the electric field and improving the dielectric insulation at the opening 28 of the internal wall 27, the formation of electric discharges or electric arcs is prevented or greatly reduced, even if the internal dielectric distances are relatively small.

This allows carrying out withdrawing operations of the switching apparatus in a very safe manner and it greatly improves safety levels for operators possibly accessing the section 2B of the cabinet 2, e.g. during maintenance operations.

Moreover, the electric switchgear can be easily designed with an overall compact size without jeopardizing the dielectric insulation levels between the live parts and the other internal components.

The electric switchgear, according to the invention, can be easily realized at industrial levels.

Thus, it can be easily manufactured at competitive costs with similar installations of the state of the art.

## Claims

1. An electric switchgear (1) for low-voltage or medium-voltage applications comprising:
- a cabinet (2) having a plurality of walls (21, 22, 23, 24, 25) defining an internal volume, said cabinet including adjacent first and second sections (2A, 2B);
- first and second disconnection contacts (31, 32) electrically connectable with corresponding conductors of an electric line, said first and second disconnection contacts being accommodated in the first section (2A) of said cabinet;
- a withdrawable switching apparatus (4) reversibly movable along a reference direction (D) of motion, said switching apparatus comprising third and fourth disconnection contacts (43, 44) that can be electrically coupled with or decoupled from said first and second disconnection contacts (31, 32), respectively, upon corresponding movements of said switching apparatus, said switching apparatus being accommodated in the second section (2B) of said cabinet;
- a shutter assembly (5) movable along a reference plane (P) of motion perpendicular to the reference direction (D) of motion of said switching apparatus, wherein said shutter assembly (5) comprises a first shutter panel (51) and a second shutter panel (52) at least partially made of conductive material and spaced one from another, wherein said shutter assembly (5) comprises one or more elongated connection elements (53) mechanically connecting said first and second shutter panels with a rigid link, so that said first and second shutter panels move together along said reference plane of motion (P) while maintaining their relative position,
wherein each connection element (53) is at least partially made of electrically conductive material and has an elongated blunt shape with rounded edges, wherein each connection element (53) comprises opposite first and second ends (531, 532) mechanically connected with said first and second shutter panels (51, 52), respectively, and an intermediate portion (533) defining a separation gap (55) between said first and second shutter panels (51, 52), wherein the intermediate portion of each connection element has an elongated rounded shape,
**characterized in that** the first and second ends (531, 532) of each connection element (53) have a rounded shape and include flat coupling surfaces (531A, 532A) for coupling with corresponding coupling surfaces of said first and second shutter panels (51, 52), and
the intermediate portion (533) is at least partially covered by a layer (534) of electrically insulating material co-molded with said connection element (53).

2. Electric switchgear, according to claim 1, **characterized in that** said shutter assembly (5) comprises a pair of connection elements (53) arranged parallel one to another along directions parallel to said reference plane (P) of motion and perpendicular to a basement wall (21) of said cabinet.

3. Electric switchgear, according to one or more of the previous claims, **characterized in that** said first shutter panel (51) has opposite first and second edges (511, 512), wherein said first edge (511) partially delimits a separation gap (55) between said first and second shutter panels (51, 52), wherein said first edge (511) has a rounded shape.

4. Electric switchgear, according to claim 3, **characterized in that** the first edge (511) of said first shutter panel (51) is covered by a layer (511A) of electrically insulating material.

5. Electric switchgear, according to one or more of the previous claims, **characterized in that** said second shutter panel (52) has opposite third and fourth edges (523, 524), wherein said third edge (523) partially delimits a separation gap (55) between said first and second shutter panels (51, 52), wherein said third edge (523) has a rounded shape.

6. Electric switchgear, according to claim 5, **characterized in that** the third edge (523) of said second shutter panel (52) is covered by a layer (523A) of electrically insulating material.

7. Electric switchgear, according to claim 5 or 6, **characterized in that** the fourth edge (524) of said second shutter panel (52) is covered by a layer (524A) of electrically insulating material.

8. Electric switchgear, according to one or more of the previous claims, **characterized in that** said shutter assembly (5) is reversibly movable along said reference plane (P) of motion between a non-protective position (A3), in which said first shutter panel (51) is not interposed between said first disconnection contacts (31) and said third disconnection contacts (43) and in which said second shutter panel (52) is not interposed between said second disconnection contacts (32) and said fourth disconnection contacts (44), and a protective position (A4), in which said first shutter panel (51) is interposed between said first disconnection contacts (31) and said third disconnection contacts (43) and in which said second shutter panel (52) is interposed between said second disconnection contacts (32) and said fourth disconnection contacts (44).

9. Electric switchgear, according to one or more of the previous claims, **characterized in that** said switching apparatus (4) is reversibly movable along said reference direction (D) of motion, between an inserted position (A1), in which said third disconnection contacts (43) are coupled with said first disconnection contacts (31) and in which said fourth disconnection contacts (44) are coupled with said second disconnection contacts (32), and said withdrawn position (A2), in which said third disconnection contacts (43) are decoupled from said first disconnection contacts (31) and in which said fourth disconnection contacts (44) are decoupled from said second disconnection contacts (32).

10. Electric switchgear, according to claims 8 and 9, **characterized in that** it comprises an actuation mechanism (6) including a plurality of motion transmission levers mechanically connecting said switching apparatus (4) with said shutter assembly (5), wherein a motion of said switching apparatus from said inserted position (A1) to said withdrawn position (A2) causes a motion of said shutter assembly (5) from said non-protective position (A3) to said protective position (A4), wherein a motion of said switching apparatus from said withdrawn position (A2) to said inserted position (A1) causes a motion of said shutter assembly (5) from said protective position (A4) to said non-protective position (A3).

## Patentansprüche

1. Elektrische Schaltanlage (1) für Niederspannungs- oder Mittelspannungs-Anwendungen, umfassend:
- einen Schrank (2), der eine Mehrzahl von Wänden (21, 22, 23, 24, 25) aufweist, die ein Innenvolumen definieren, wobei der Schrank aneinander angrenzende erste und zweite Abschnitte (2A, 2B) umfasst;
- erste und zweite Trennkontakte (31, 32), die mit entsprechenden Leitern einer elektrischen Leitung elektrisch verbindbar sind, wobei die ersten und zweiten Trennkontakte in dem ersten Abschnitt (2A) des Schranks aufgenommen sind;
- eine herausziehbare Schalteinrichtung (4), die entlang einer Referenzbewegungsrichtung (D) umkehrbar beweglich ist, wobei die Schalteinrichtung dritte und vierte Trennkontakte (43, 44) umfasst, die mit den ersten bzw. zweiten Trennkontakten (31, 32) bei entsprechenden Bewegungen der Schalteinrichtung elektrisch gekoppelt oder von diesen entkoppelt werden können, wobei die Schalteinrichtung in dem zweiten Abschnitt (2B) des Schranks aufgenommen ist;
- eine Schottungsanordnung (5), die entlang einer Referenzbewegungsebene (P) senkrecht zu der Referenzbewegungsrichtung (D) der Schalteinrichtung beweglich ist, wobei die Schottungsanordnung (5) eine erste Schottungsplatte (51) und eine zweite Schottungsplatte (52) umfasst, die zumindest teilweise aus einem leitenden Material bestehen und voneinander beabstandet sind, wobei die Schottungsanordnung (5) ein oder mehrere längliche Verbindungselemente (53) umfasst, die die ersten und zweiten Schottungsplatten mit einer starren Verbindung derart mechanisch verbinden, dass sich die ersten und zweiten Schottungsplatten zusammen entlang der Referenzbewegungsebene (P) bewegen, während sie ihre relative Position beibehalten,
wobei jedes Verbindungselement (53) zumindest teilweise aus einem elektrisch leitenden Material besteht und eine längliche stumpfe Form mit abgerundeten Ecken aufweist, wobei jedes Verbindungselement (53) gegenüberliegende erste und zweite Enden (531, 532), die mechanisch mit den ersten bzw. zweiten Schottungsplatten (51, 52) verbunden sind, und einen Zwischenabschnitt (533) umfasst, der einen Trennungsspalt (55) zwischen den ersten und zweiten Schottungsplatten (51, 52) definiert, wobei der Zwischenabschnitt jedes Verbindungselements eine längliche abgerundete Form aufweist, **dadurch gekennzeichnet, dass** die ersten und zweiten Enden (531, 532) jedes Verbindungselements (53) eine abgerundete Form aufweisen und flache Kopplungsflächen (531A, 532A) zum Koppeln mit entsprechenden Kopplungsflächen der ersten und zweiten Schottungsplatten (51, 52) umfassen, und der Zwischenabschnitt (533) zumindest teilweise von einer Schicht (534) aus elektrisch isolierendem Material bedeckt ist, das mit dem Verbindungselement (53) überspritzt ist.

2. Elektrische Schaltanlage nach Anspruch 1, **dadurch gekennzeichnet, dass** die Schottungsanordnung (5) ein Paar Verbindungselemente (53) umfasst, die entlang Richtungen parallel zu der Referenzbewegungsebene (P) und senkrecht zu einer Sockelwand (21) des Schranks parallel zueinander angeordnet sind.

3. Elektrische Schaltanlage nach einem oder mehreren der vorhergehenden Ansprüche, **dadurch gekennzeichnet, dass** die erste Schottungsplatte (51) gegenüberliegende erste und zweite Kanten (511, 512) aufweist, wobei die erste Kante (511) einen Trennungsspalt (55) zwischen den ersten und zweiten Schottungsplatten (51, 52) teilweise begrenzt, wobei die erste Kante (511) eine abgerundete Form aufweist.

4. Elektrische Schaltanlage nach Anspruch 3, **dadurch gekennzeichnet, dass** die erste Kante (511) der ersten Schottungsplatte (51) von einer Schicht (511A) aus einem elektrisch isolierenden Material bedeckt ist.

5. Elektrische Schaltanlage nach einem oder mehreren der vorhergehenden Ansprüche, **dadurch gekennzeichnet, dass** die zweite Schottungsplatte (52) gegenüberliegende dritte und vierte Kanten (523, 524) aufweist, wobei die dritte Kante (523) einen Trennungsspalt (55) zwischen den ersten und zweiten Schottungsplatten (51, 52) teilweise begrenzt, wobei die dritte Kante (523) eine abgerundete Form aufweist.

6. Elektrische Schaltanlage nach Anspruch 5, **dadurch gekennzeichnet, dass** die dritte Kante (523) der zweiten Schottungsplatte (52) von einer Schicht (523A) aus einem elektrisch isolierenden Material bedeckt ist.

7. Elektrische Schaltanlage nach Anspruch 5 oder 6, **dadurch gekennzeichnet, dass** die vierte Kante (524) der zweiten Schottungsplatte (52) von einer Schicht (524A) aus einem elektrisch isolierenden Material bedeckt ist.

8. Elektrische Schaltanlage nach einem oder mehreren der vorhergehenden Ansprüche, **dadurch gekennzeichnet, dass** die Schottungsanordnung (5) entlang der Referenzbewegungsebene (P) zwischen einer nicht schützenden Position (A3), in der die erste Schottungsplatte (51) nicht zwischen den ersten Trennkontakten (31) und den dritten Trennkontakten (43) angeordnet ist und in der die zweite Schottungsplatte (52) nicht zwischen den zweiten Trennkontakten (32) und den vierten Trennkontakten (44) angeordnet ist, und einer schützenden Position (A4), in der die erste Schottungsplatte (51) zwischen den ersten Trennkontakten (31) und den dritten Trennkontakten (43) angeordnet ist und in der die zweite Schottungsplatte (52) zwischen den zweiten Trennkontakten (32) und den vierten Trennkontakten (44) angeordnet ist, umkehrbar beweglich ist.

9. Elektrische Schaltanlage nach einem oder mehreren der vorhergehenden Ansprüche, **dadurch gekennzeichnet, dass** die Schalteinrichtung (4) entlang der Referenzbewegungsrichtung (D) zwischen einer eingesetzten Position (A1), in der die dritten Trennkontakte (43) mit den ersten Trennkontakten (31) gekoppelt sind und in der die vierten Trennkontakte (44) mit den zweiten Trennkontakten (32) gekoppelt sind, und der herausgezogenen Position (A2), in der die dritten Trennkontakte (43) von den ersten Trennkontakten (31) entkoppelt sind und in der die vierten Trennkontakte (44) von den zweiten Trennkontakten (32) entkoppelt sind, umkehrbar beweglich ist.

10. Elektrische Schaltanlage nach Anspruch 8 und 9, **dadurch gekennzeichnet, dass** sie einen Betätigungsmechanismus (6) umfasst, der eine Mehrzahl von Bewegungsübertragungshebeln umfasst, die die Schalteinrichtung (4) mechanisch mit der Schottungsanordnung (5) verbinden, wobei eine Bewegung der Schalteinrichtung von der eingesetzten Position (A1) zu der herausgezogenen Position (A2) eine Bewegung der Schottungsanordnung (5) von der nicht schützenden Position (A3) zu der schützenden Position (A4) bewirkt, wobei eine Bewegung der Schalteinrichtung von der herausgezogenen Position (A2) zu der eingesetzten Position (A1) eine Bewegung der Schottungsanordnung (5) von der schützenden Position (A4) zu der nicht schützenden Position (A3) bewirkt.

## Revendications

1. Appareillage de commutation électrique (1) pour applications à basse tension ou moyenne tension, comprenant :
- une armoire (2) ayant une pluralité de parois (21, 22, 23, 24, 25) définissant un volume interne, ladite armoire incluant des première et seconde sections adjacentes (2A, 2B) ;
- des premier et deuxième contacts de déconnexion (31, 32) électriquement raccordables à des conducteurs correspondants d'une ligne électrique, lesdits premier et deuxième contacts de déconnexion étant logés dans la première section (2A) de ladite armoire ;
- un appareil de commutation retirable (4) réversiblement mobile le long d'une direction de référence (D) de mouvement, ledit appareil de commutation comprenant des troisième et quatrième contacts de déconnexion (43, 44) qui peuvent être électriquement couplés auxdits premier et deuxième contacts de déconnexion (31, 32), ou découplés de ces derniers, respectivement, à la suite de mouvements correspondants dudit appareil de commutation, ledit appareil de commutation étant logé dans la seconde section (2B) de ladite armoire ;
- un ensemble de volets (5) mobile le long d'un plan de référence (P) de mouvement perpendiculaire à la direction de référence (D) de mouvement dudit appareil de commutation, dans lequel ledit ensemble de volets (5) comprend un premier panneau de volet (51) et un second panneau de volet (52) au moins partiellement faits de matériau conducteur et espacés l'un de l'autre, dans lequel ledit ensemble de volets (5) comprend un ou plusieurs éléments de raccordement allongés (53) raccordant mécaniquement lesdits premier et second panneaux de volet avec une liaison rigide, pour que lesdits premier et second panneaux de volet se mettent en mouvement conjointement le long dudit plan de référence de mouvement (P) tout en maintenant leur position relative,
dans lequel chaque élément de raccordement (53) est au moins partiellement fait de matériau électroconducteur et a une forme épointée allongée avec des bords arrondis, dans lequel chaque élément de raccordement (53) comprend des première et seconde extrémités opposées (531, 532) mécaniquement raccordées auxdits premier et second panneaux de volet (51, 52), respectivement, et une partie intermédiaire (533) définissant un espace de séparation (55) entre lesdits premier et second panneaux de volet (51, 52), dans lequel la partie intermédiaire de chaque élément de raccordement a une forme arrondie allongée, **caractérisé en ce que** les première et seconde extrémités (531, 532) de chaque élément de raccordement (53) ont une forme arrondie et incluent des surfaces de couplage plates (531A, 532A) destinées à se coupler à des surfaces de couplage correspondantes desdits premier et second panneaux de volet (51, 52), et la partie intermédiaire (533) est au moins partiellement couverte par une couche (534) de matériau électro-isolant conjointement moulé avec ledit élément de raccordement (53).

2. Appareillage de commutation électrique selon la revendication 1, **caractérisé en ce que** ledit ensemble de volets (5) comprend une paire d'éléments de raccordement (53) agencés parallèles l'un à l'autre le long de directions parallèles audit plan de référence (P) de mouvement et perpendiculaires à une paroi de base (21) de ladite armoire.

3. Appareillage de commutation électrique selon une ou plusieurs des revendications précédentes, **caractérisé en ce que** ledit premier panneau de volet (51) a des premier et deuxième bords opposés (511, 512), dans lequel ledit premier bord (511) délimite partiellement un espace de séparation (55) entre lesdits premier et second panneaux de volet (51, 52), dans lequel ledit premier bord (511) a une forme arrondie.

4. Appareillage de commutation électrique selon la revendication 3, **caractérisé en ce que** le premier bord (511) dudit premier panneau de volet (51) est couvert par une couche (511A) de matériau électro-isolant.

5. Appareillage de commutation électrique selon une ou plusieurs des revendications précédentes, **caractérisé en ce que** ledit second panneau de volet (52) a des troisième et quatrième bords opposés (523, 524), dans lequel ledit troisième bord (523) délimite partiellement un espace de séparation (55) entre lesdits premier et second panneaux de volet (51, 52), dans lequel ledit troisième bord (523) a une forme arrondie.

6. Appareillage de commutation électrique selon la revendication 5, **caractérisé en ce que** le troisième bord (523) dudit second panneau de volet (52) est couvert par une couche (523A) de matériau électro-isolant.

7. Appareillage de commutation électrique selon la revendication 5 ou 6, **caractérisé en ce que** le quatrième bord (524) dudit second panneau de volet (52) est couvert par une couche (524A) de matériau électro-isolant.

8. Appareillage de commutation électrique selon une ou plusieurs des revendications précédentes, **caractérisé en ce que** ledit ensemble de volets (5) est réversiblement mobile le long dudit plan de référence (P) de mouvement entre une position de non-protection (A3), dans laquelle ledit premier panneau de volet (51) n'est pas interposé entre lesdits premiers contacts de déconnexion (31) et lesdits troisièmes contacts de déconnexion (43) et dans laquelle ledit second panneau de volet (52) n'est pas interposé entre lesdits deuxièmes contacts de déconnexion (32) et lesdits quatrièmes contacts de déconnexion (44), et une position de protection (A4), dans laquelle ledit premier panneau de volet (51) est interposé entre lesdits premiers contacts de déconnexion (31) et lesdits troisièmes contacts de déconnexion (43) et dans laquelle ledit second panneau de volet (52) est interposé entre lesdits deuxièmes contacts de déconnexion (32) et lesdits quatrièmes contacts de déconnexion (44).

9. Appareillage de commutation électrique selon une ou plusieurs des revendications précédentes, **caractérisé en ce que** ledit appareil de commutation (4) est réversiblement mobile le long de ladite direction de référence (D) de mouvement, entre une position insérée (A1), dans laquelle lesdits troisièmes contacts de déconnexion (43) sont couplés auxdits premiers contacts de déconnexion (31) et dans laquelle lesdits quatrièmes contacts de déconnexion (44) sont couplés auxdits deuxièmes contacts de déconnexion (32), et ladite position retirée (A2), dans laquelle lesdits troisièmes contacts de déconnexion (43) sont découplés desdits premiers contacts de déconnexion (31) et dans laquelle lesdits quatrièmes contacts de déconnexion (44) sont découplés desdits deuxièmes contacts de déconnexion (32).

10. Appareillage de commutation électrique selon les revendications 8 et 9, **caractérisé en ce qu'**il comprend un mécanisme d'actionnement (6) incluant une pluralité de leviers de transmission de mouvement raccordant mécaniquement ledit appareil de commutation (4) audit ensemble de volets (5), dans lequel un mouvement dudit appareil de commutation depuis ladite position insérée (A1) jusqu'à ladite position retirée (A2) cause un mouvement dudit ensemble de volets (5) depuis ladite ¬position de non-protection (A3) jusqu'à ladite position de protection (A4), dans lequel un mouvement dudit appareil de commutation depuis ladite position retirée (A2) jusqu'à ladite position insérée (A1) cause un mouvement dudit ensemble de volets (5) depuis ladite position de protection (A4) jusqu'à ladite position de non-protection (A3).
